# EUROPEAN PATENT APPLICATION

(11) **EP 4 435 386 A1**
(43) Date of publication of application: **25.09.2024**
(21) Application number: 23163731.5
(22) Date of filing: 23.03.2023
(51) Int. Cl.: G01D 11/30, G01S 7/481, G01S 7/521

(54) **SENSOR MOUNTING STATION FOR TESTING**

(71) Applicant: Aptiv Technologies AG, 8200 Schaffhausen (CH)
(72) Inventor: ABBRUZZESE, Gian Marco, Dublin, 2 (IE); EDGARIAN, Robik, Dublin, 2 (IE)
(74) Representative: Lewis Silkin LLP

(57) **Abstract**

A sensor mounting station (10) includes a sensor mount (12) for removably mounting a sensor (S). The sensor/mount is spatially adjustable by a yaw control (15), a roll control (16) and a pitch control (17), along with an x, y, z direction adjustable block 14. Each of the respective yaw, roll and pitch rotational axes pass through a common point in space, corresponding to a middle point of the sensor (S). In one form, a laser device is mountable to the sensor mount to point a laser beam in a direction corresponding to a sensing direction normal to the sensor.

## Description

### Introduction

The present disclosure relates to a sensor mounting station for testing, e.g. of vehicular sensors units such as radars and cameras.

### Background

Modern vehicles which possess autonomous driving functionality require precise sensing of their immediate environment and beyond to be operated safely. This is often achieved by a variety of sensors, such as one or more radar sensors and/or cameras that are mounted to the vehicle body.

In order to locate a sensor in a test and/or calibration environment (e.g. a radar in an anechoic chamber or a camera relative to a target object), a robotic arm is usually employed so that the sensor's location in space is precisely controlled. However, such robotic solutions are typically expensive, large and heavy. As such, a robotic arm may not be feasible for use in a small radar chamber which is otherwise sufficient for testing purposes. Even small robotic arms may be too large for a desirable size of chamber and, in any event, are heavy/inconvenient to relocate.

### Summary

According to the above, a need has been identified to provide a mounting unit for sensor testing that does not rely on an expensive robot arm for spatial adjustments.

A first aspect is outlined according to claim 1 of the appended claims. Broadly, a sensor mounting station is provided, comprising: a sensor mounting device for mounting a sensor; wherein the sensor mounting device is movable about roll, yaw and pitch axes of movement (e.g. relative to a base), and each of the axes pass through a common point in space, corresponding to a middle point of the sensor when mounted to the sensor mounting device. Broadly, the mounting device is rotatable about at least one axis, preferably two axes, and most preferably three axes; i.e. roll, yaw and pitch axes.

In embodiments, each of the roll, yaw and pitch axes of movement are enabled by a respective rotational movement device, e.g. a roll device, a yaw device and a pitch device. Typically, a rotational movement device will be a two-part structure where the parts have circular, shaft or arcuate abutting surfaces that move relative to each other about a defined rotational axis. Indeed, in the disclosed embodiment the yaw, roll and pitch devices are constrained with axes that pass only through the common point, i.e. these axes are fixed relative to each other and no deviation is possible to ensure that articulation always occurs about the sensor middle point. This is distinct from, say, a robotic arm where an axis itself can be relocated. In embodiments, one or more of the movement devices is motorised, and moves in response to an electrical signal. Alternative forms may feature a manual adjustment.

In embodiments, the yaw device is actuated to rotate a horizontal yaw adjustable plate about a vertical axis. The term plate herein may be substituted for adaptor or functionally equivalent structure.

In embodiments, the roll device is located on a vertical extension of the yaw plate and actuated to rotate a roll adjustable plate about a first horizontal axis.

In embodiments, the pitch device is located on the roll plate and actuated to rotate the sensor mount device (or equivalent pitch adjustable plate) about a second horizontal axis, perpendicular to the first horizontal axis.

In embodiments, the sensor mounting device is configured to be further moveable in any or all of x, y and z directions relative to a base of the station, i.e. forward and back, left and right, up and down. In this way, the sensor mounting station is configured to enable movement of a sensor mounted to the device in six degrees of freedom, including three translational motions and three rotational motions. In one form, x, y, z movement is enabled by a base-proximate sub-station that is manually adjustable. The sub-station enables fine tuning in x, y, z direction, which affects the entire sensor mount structure above it.

In embodiments, a laser mounting device is provided, relative to the sensor mounting device, for mounting a laser to emit a laser beam in a direction passing through the common point. In this way, the sensor on the mounting station may be positioned relative to an object to be detected by the sensor, and the laser beam accurately indicates the facing direction of the sensor mount relative to the object to be detected. The beam serves as a laser pointer which is mounted behind the sensor bracket and extends through a hole (e.g. in a position equal to the centre point of radar) for initial set up of the sensor mounting station. In one example, a radar sensor is then placed over hole in the bracket, and accurately faces the object to be sensed.

According to a method of use of the station, a laser is mounted to (or is part of) the laser mounting device, behind the sensor mounting device (prior to mounting of a sensor) relative to a frontal direction where an object to be detected is located. A laser beam is emitted through an opening of the sensor mounting device toward the object and axes of movement of the station are adjusted until the laser beam coincides with a desired point on the object to be detected. The laser beam may be turned off and/or the laser device removed. A sensor is then mounted to the sensor mounting device, accurately facing the direction of the object to be detected. A test step is then performed on the sensor.

The invention facilitates, in addition to mounting of the sensor, more flexibility and control for verification tests via the mount station as described herein. Particularly, the station provides an accurate spatial control of the sensor position. A particular form enables six degrees of freedom of movement, namely: forward and back, left and right, up and down, roll, yaw and pitch; of a sensor when mounted to the sensor mount device. The invention may be described in general terms as a "six axes sensor motion station" because it enables complete freedom of movement of a sensor unit relative to a base fixture in a testing chamber.

Accordingly, the problems of weight, control and cost of a robotic arm are solved by an assembly of parts that can be made from light and compact materials such as aluminium and/or plastic. It may be possible to automate, by servo motors or the like, relative movement of the one or more parts of the mounting station and optionally implement manual adjustment of other parts.

In general, the main purpose of the invention is enabling accurate positioning of a sensor (e.g. radar or camera) relative to a target (such as a corner reflector) in a testing area. The sensor mounting station finds particular application in small radar chambers. The invention enables articulation of a sensor about every axis, analogous to a robot arm, and with comparable or enhanced precision. In a preferred form, the station has motorized control of roll, pitch and yaw movement of the sensor mount, and a manually controlled x, y, z movement sub-station at a base of the unit.

The sensor testing station may be in the form of an articulated platform that also incorporates an x, y, z adjustable block at a base thereof. The articulated platform may be adjusted by two step motors, each enabling rotational movement about axes in respective perpendicular planes (for roll and yaw movement of respective roll and yaw plates) and a goniometer for angular adjustment of pitch of the sensor mounting device (or pitch adjustable plate).

The sensor mount or adaptor may include additional mounting features for supporting (e.g. connecting and/or clipping to) the sensor. A laser generating device may be incorporated with or attachable to the sensor mount.

The invention may be integrated or combined with a further mounting device for mounting a vehicle part for independent movement relative to the sensor on the sensor mounting station, where the independent relative movement of the vehicle part comprises at least three degrees of freedom selected from: forward and back, left and right, up and down, roll, yaw and pitch. A combined apparatus of this type may be used in the context of testing properties of a radar sensor when the vehicle part is disposed between it and a radar target simulator.

### Brief Description of Drawings

Illustrative embodiments will now be described with reference to the accompanying drawings in which:
Figure 1 illustrates a front overview of a sensor mounting station according to the invention;
Figure 2 illustrates a rear overview of the sensor mounting station;
Figure 3 illustrates an overview of a yaw control device and x, y, z direction control device;
Figure 4 illustrates an overview of a roll control device and pitch control device;

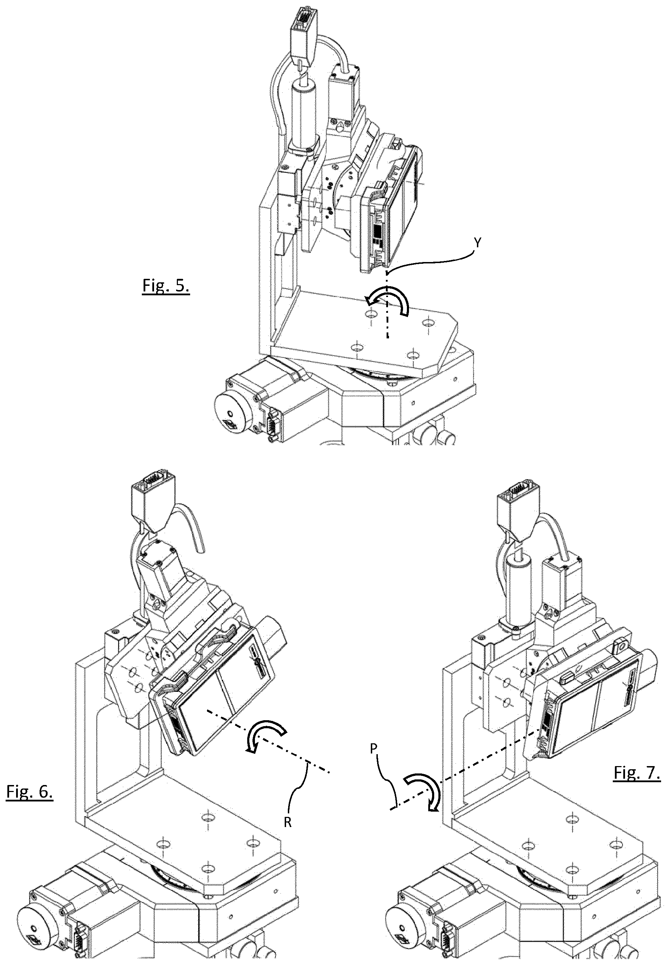

Figure 5 illustrates a front overview of the sensor mounting station being adjusted about a yaw axis;
Figure 6 illustrates a front overview of the sensor mounting station being adjusted about a roll axis;
Figure 7 illustrates a front overview of the sensor mounting station being adjusted about a pitch axis;
Figure 8 illustrates a partial front overview of a sensor mount device, with sensor removed;
Figure 9 illustrates a partial front overview where the sensor mount device has been removed; and
Figure 10 illustrates an exploded overview of the sensor mounting station.

### Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for structural features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction. Indeed, in the present case a term such as "horizontal" axis or "vertical" axis can be affected by the orientation imposed on the sensor mounting structure. Therefore, all directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

A sensor mounting station according to an embodiment is illustrated by the drawing figures. The station is a "test rig", generally denoted 10, to be associated with a sensor S which is removably attachable to a sensor mount 12. The sensor S is to be spatially fixed in a position relative to a target object (not shown).

The sensor S is supported at a point in space and adapted for adjustable movement relative to a base plate 13 by an x, y, z linear/translational adjustment block/sub-station 14, and three rotational adjustment means, namely a yaw control device 15, a roll control device 16 and a pitch control device 17. Base 13 may be secured to a ground surface by the illustrated fixing holes at a specified distance from a target object in a testing chamber.

In the illustrated form, block 14 is manually adjustable by various slidable inter-engaging tracks to move an upper platform 18 in x, y and/or z linear directions, relative to the base plate 13 upon which it is mounted. Alternative forms may implement electronic control of directional block 14. As such, it will be apparent that all components supported above platform 18, including sensor S, are correspondingly movable translated linearly in front-to-back, side-to-side and up and down directions.

Platform 18 supports the yaw control device 15 which, in the illustrated form, comprises a rotating step motor 20 configured to pivot/rotate an angle plate 19 about a vertical yaw axis Y. The motor 20 accurately actuates a circular platform/dial 21, affixed to angle plate 19. Degrees to measure movement may be marked/registered on the edge of dial 21.

An upstanding extension/frame 22 extends vertically from an edge of the horizontal base of angle plate 19 and provides support for the upper rotational devices 16, 17 and, ultimately, sensor S. As such, all components "upstream" of yaw control device 15 are reoriented about axis Y when a yaw adjustment is made.

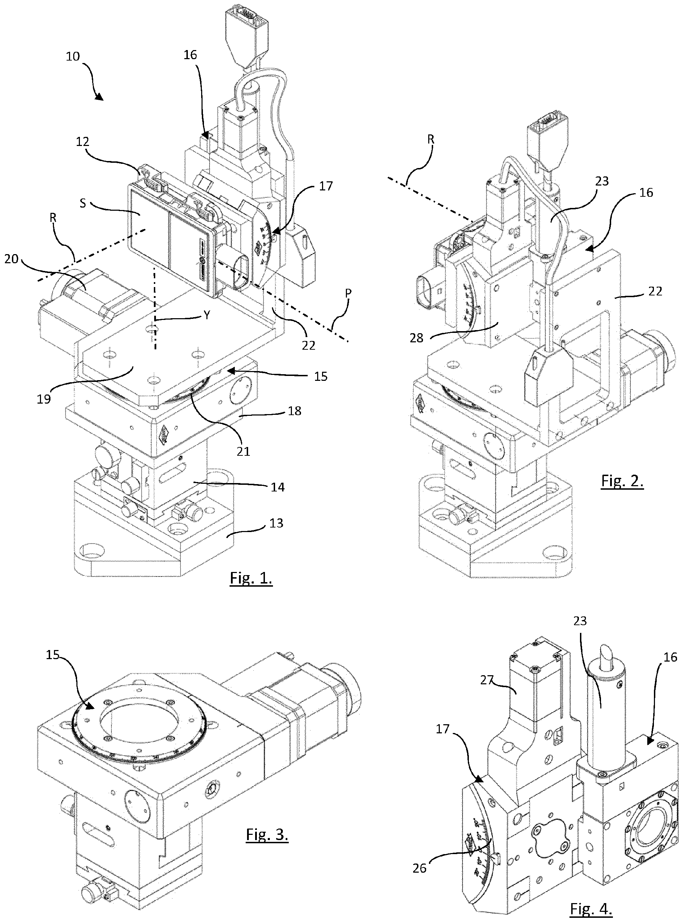

Roll control device 16 is affixed directly to frame 22 as seen in Figure 2, with detail of the device best seen in Figure 4. Particularly, roll control device 16 implements a smaller step motor 23 for rotationally actuating an intermediate roll plate 28 which in turn mounts the pitch device 17. In this way the rotational orientation of the pitch control device 17 (i.e. a goniometer) can be adjusted about a horizontal roll axis R. All upstream components, including the sensor S, are thus roll adjustable.

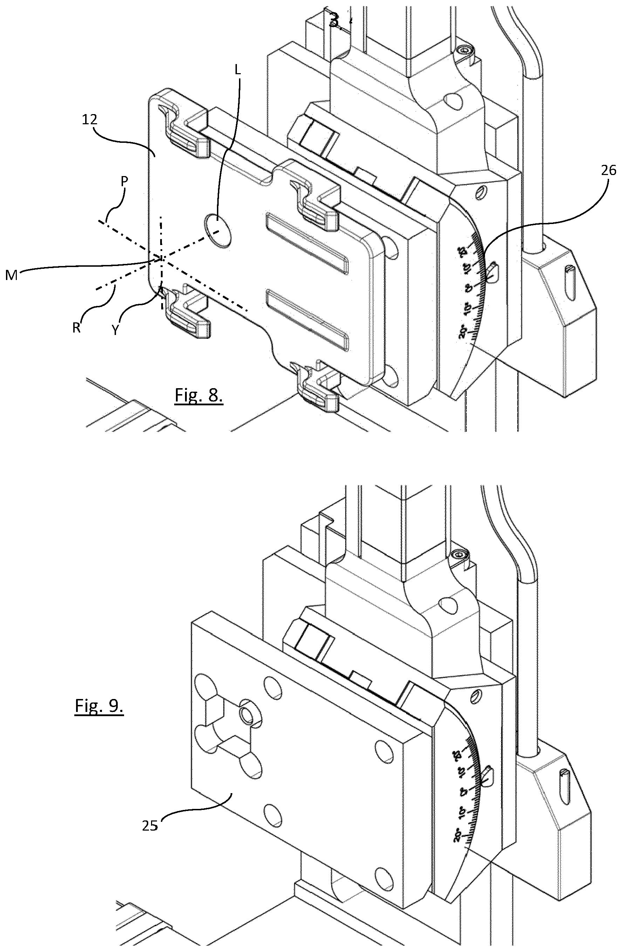

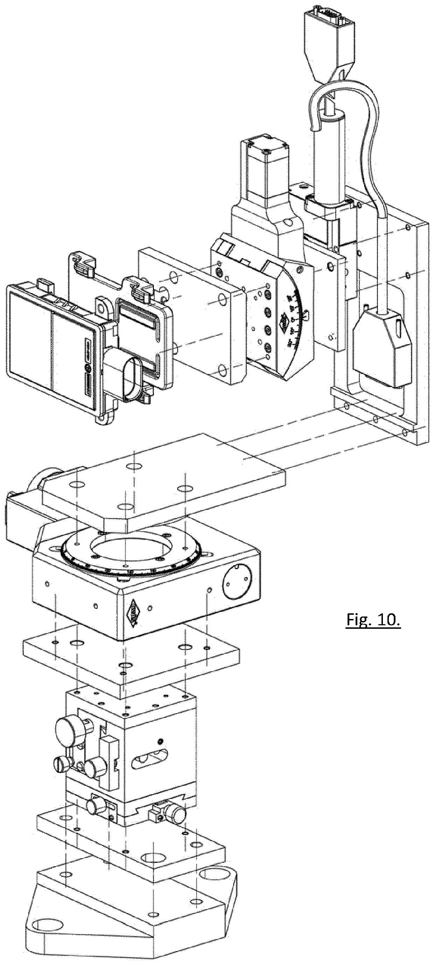

The pitch control device 17, also best visible in Figure 4, includes a front surface (visible in Figure 10) that is affixable to the sensor, such as via sensor mount 12 or an intermediate pitch plate 25 (visible in Figures 9 and 10), and a convex rear surface movably coupled to a concave receiving surface thereby cooperating to tilt the front surface about a horizontal pitch axis P. An arcuate track 26 is visible in Figures 4, 8 and 9 and surface markings may indicate the degree of angular displacement as pitch is adjusted. Pitch movement is actuated by a motor 27 controlled electronically along with step motors 20 and 23.

Therefore, according to the foregoing, the motion station system has four main components for executing its function, namely an X-Y-Z-station 14, a goniometer (pitch device 17), one small rotating step motor roll device 16 and one bigger rotating step motor yaw device 15. These moving part components are assembled together by adaptors/mounts, e.g. made out of aluminium.

It is particularly apparent according to Figure 1 that sensor mount 12 supports a sensor S (e.g. radar, camera) to ensure that every tilt/rotation axis (Y, R, P) goes through a common point within the sensor S, e.g. that corresponds to an antenna middle point and creates a "universal" pivot point about which all spatial adjustment of the sensor takes place. This positioning is enabled by the fitting bracket/mount 12 itself or, in principle, a sensor may be directly fitted to the locating holes visible in the pitch control device 17 (see Figure 4) or an equivalent mounting plate.

In this way, the sensor position is precisely controllable with respect to a distant object to be detected, not illustrated.

In order to assist with positioning the sensor S relative to a distant object, a laser emitting device may be mounted to direct a laser beam to point forwardly away from station 10 toward an object in a test environment. The characteristic dot of light of the laser is able to ensure that the sensor will point directly at the distant object.

In one implementation, a laser emitting device is attachable behind sensor mount 12, e.g. to plate 25 (see Figures 8 and 9), before the sensor S is secured in place, such that a laser beam passes through a hole L corresponding to the middle point M of the sensor. With reference to Figure 1, the emitted laser beam will be directed along axis R, but will be angularly displaced from this position as/if pitch is adjusted.

The laser emitting device can be removed when the sensor S is in place because, in the above implementation, the laser beam cannot pass through the sensor in use.

An alternative configuration is possible where a mounting bracket projecting forward of the sensor/mount 12 could suspend a laser pointer to emit a laser beam corresponding to the middle point of the sensor. However, the laser device should be removed prior to use of the sensor to avoid interfering with its detection signal.

The embodiment of sensor mounting station described above and shown in the drawing figures, particularly the exploded view of Figure 10, is comprised of two main substations, i.e. a base unit which provides x, y, z translational movement and a second sub-station mounted upon the base unit which is a combination of integrated yaw, roll and pitch devices which provide rotational movement about an intersection of three axes.

So long as the station can maintain an intersection of yaw, roll and pitch rotational axes corresponding to the middle point of the sensor, alternative forms of the invention may be possible where the sequence of yaw, roll and pitch devices are re-ordered. For example, pitch adjustment upstream of yaw and roll or any combination thereof.

However, it is not envisaged to provide x, y and/or z translational adjustment associated directly at the sensor mount or other rotational devices because this would move the rotational axes Y, R, P out of alignment so there is no common intersection point.

The sensor mounting station may be used according to an exemplary method, e.g. wherein a laser device is mounted to or proximate the sensor mount and a laser beam is emitted for pointing toward an object to be sensed. Due to its mounting at a position corresponding to the sensor, the laser beam will point in a direction normal to the sensor emitter, i.e. the same as a detection direction. Depending on where the laser initially points, indicated by the distinctive "red dot" of the laser, the sensor mount can be adjusted for yaw, roll and/or pitch orientation, optionally along with translational adjustment, until the laser beam coincides with the object to be sensed. The laser device may be removed and/or turned off followed by mounting a sensor to the sensor mounting station in the position determined by the laser device. Functions of the sensor can then be tested relative to the object to be sensed.

By way of summary, the invention is generally embodied by a sensor mounting station that includes a sensor mount for removably mounting a sensor. The sensor/mount is spatially adjustable by a yaw control, a roll control and a pitch control, which may be achieved by one or more separate devices. Such rotational adjustment is optionally combined with an x, y, z direction adjustment. Each of the respective yaw, roll and pitch rotational axes pass through a common point in space, corresponding to a middle point of the sensor. In one form, a laser device is mountable to the sensor mount to point a laser beam in a direction corresponding to a middle point sensing direction normal to the sensor.

## Claims

1. A sensor mounting station, comprising:
a sensor mount for removably mounting a sensor;
a control device configured to orient the sensor mount about a plurality of axes;
wherein the plurality of axes are constrained to pass through a common point in space, corresponding to a middle point of a sensor when mounted to the sensor mounting device.

2. The sensor mounting station of claim 1, wherein the control device is configured to rotate the sensor mount about at least two of yaw, roll and pitch axes.

3. The sensor mounting station of claim 1 or 2, wherein the control device is comprised of separate devices for orienting the sensor mount about yaw, roll and/or pitch axes.

4. The sensor mounting station of any preceding claim, further comprising a translational displacement device.

5. The sensor mounting station of claim 4, wherein the translational displacement device is configured for movement in x, y and/or z directions.

6. The sensor mounting station of claim 4 or 5, wherein the translational displacement device is located proximate a base of the sensor mounting station and configured to provide translational displacement to the control device.

7. The sensor mounting station of claim 6, wherein the translational displacement device comprises a platform, configured for translational movement, for coupling to the control device.

8. The sensor mounting station of any preceding claim, wherein the control device is comprised of a yaw control device configured to rotate a support element about the yaw axis, the support element being connectable to a roll control device and/or a pitch control device.

9. The sensor mounting station of claim 8, wherein the roll control device is configured to rotate a support element about the roll axis, the support element being connectable to the pitch control device and/or the yaw control device.

10. The sensor mounting station of claim 9, wherein the pitch control device is configured to rotate a support element about the pitch axis, the support element being connectable to the sensor mount, or is integrated with the sensor mount, or connectable to the roll control device or the yaw control device.

11. The sensor mounting station of any preceding claim, comprising a laser device mount or wherein the sensor mount is configured to function as a laser device mount, such that a laser beam can be emitted normal to a surface of the sensor for pointing at an object to be sensed by the sensor.

12. The sensor mounting station of any preceding claim, wherein the control device is motorised for incremental angular displacement about the plurality of axes.

13. A method for mounting a sensor for testing, including:
mounting a sensor to a sensor mounting station according to any preceding claim;
facing the sensor in a direction of a target object;
activating the sensor to detect the target object
collecting data corresponding to detection of the target object and using same to analyse performance of the sensor.

14. The method of claim 13, wherein the direction of the target object is predetermined by the steps of mounting a laser device to or proximate the sensor mount and emitting a laser beam coincident with a middle point of the sensor to be mounted; and adjusting the yaw, roll, and/or pitch orientation of the sensor mount until the laser beam coincides with the target object to be sensed.

15. The method of claim 13, including further adjusting an x, y, and/or z linear displacement direction of the sensor mount until the laser beam coincides with the object to be sensed.
